# EUROPEAN PATENT APPLICATION

(11) **EP 3 460 105 A1**
(43) Date of publication of application: **27.03.2019**
(21) Application number: 17192486.3
(22) Date of filing: 21.09.2017
(51) Int. Cl.: C25C 1/18, C01B 33/12, C22B 7/00, C22B 3/00

(54) **PROCESS FOR THE TREATMENT OF LEAD-CONTAINING GLASS**

(71) Applicant: E.V.H. S.R.L., 20149 Milano (IT)
(72) Inventor: VOLAKAKIS, Emmanouil, 20020 Lainate (IT)
(74) Representative: Palladino, Saverio Massimo

(57) **Abstract**

It is described a process for recycling lead-containing glass with quantitative recovery of the lead in metal form and conversion of the remaining glass into soluble silicates.

## Description

### Field of the invention

The present invention relates to a process for the separation and recovery of lead from glassware and glass articles containing the element, apart from the glass of funnels which derive from the disposal of cathode-ray tube television sets, and to the conversion of the remaining glass into soluble silicates.

### State of the Art

It is well known that lead is a toxic element for humans and animals. Lead poisoning may be acute or chronic, due in the latter case to long-term exposure to sources of the element. Intense exposure generally leads to central nervous system and neuromuscular symptoms, while exposure over longer periods usually results into gastrointestinal symptoms. Signs of chronic exposure include loss of short-term memory or concentration, depression, nausea, abdominal pain, loss of coordination, tingling in the extremities, problems with sleep, headaches, and anemia.

Food or water may be sources of chronic exposure to lead. As to food, vegetables grown in soil that is high in lead, or meat or milk of animals that in their turn ate lead-contaminated food in their diet, may give rise to build-up of the element in the body; the same happens when drinking water is contaminated with lead.

A possible origin of lead contamination in soil and water is improper disposal of lead-containing glass. Simple dumping this kind of glass in landfills gives rise over time to leakage of the element in the water surrounding the glass, which may be permanently present in the soil or due to rain; the element extracted from glass by water may reach the groundwater, thus contaminating wide areas and entering the drinking water networks.

For these reasons, recent regulations require that lead-containing glass be treated and possibly recycled separately from normal glass.

In the last ten years or so, a great amount of lead-containing glass has derived from cathode-ray tube (CRT) television sets disposed of due to their rapid replacement by LCD and plasma television sets first, and LED sets later on; in CRTs, the rear part of the tube (funnel) was made of glass containing about 17% by weight of lead, in order to shield from the weak X-rays generated by the functioning of the device.

However, another source of lead glass is from glassware and ornamental glass articles, such as jars, bowls and costume jewelry; lead is employed in glass for these uses thanks to its known property of increasing the refractive index of glass, leading to brighter articles.

While at present lead glass from CRTs represents the big part of this waste, its amount is bound to fade out over time due to the fact that the production of CRTs has ceased globally; to the contrary, other lead glass articles, among which those mentioned above, are a more steady source of amounts of this material to be disposed of.

Some possible methods for the recovery of lead from glass containing it are described in technical-scientific literature; these often refer to glass from CRTs due to the recent surge of this waste, but the described methods are of general applicability.

The article "A novel process utilizing subcritical water to remove lead from wasted lead silicate glass", of H. Miyoshi et al., Chemistry Letters, vol. 33 (2004), no. 8, pages 956-957, describes a lead glass attack made using water only at a temperature of 355 °C and a pressure of approximately 240 bar, followed by acid leaching at 100 °C to convert the silicate of the glass into silica and recover a soluble lead salt.

The article "Development of an eco-friendly material recycling process for spent lead glass using a mechanochemical process and Na2EDTA reagent", R. Sasai et al., Environmental Science Technology, vol. 42, (2008) no. 11, pages 4159-4164, describes a micronization procedure of glass with zirconium oxide balls in presence of a solution of Na₂EDTA, with which up to 99% of the lead initially contained in the glass can be extracted.

Finally, the article "Lead extraction from waste funnel cathode-ray tubes glasses by reaction with silicon carbide and titanium nitride", P.G. Yot et al., Journal of Hazardous Materials, vol. 172 (2009), no. 1, pages 117-123, shows a study on the reduction of Pb(ll) to metal lead in the glass; this reduction however is said to occur only partially.

However, the processes described in these articles represent only basic studies and for various reasons are not useful in real practice for the purposes of an industrial disposal process of lead glass to be implemented on large quantities of material.

In the United Kingdom, Nulife Glass Ltd. recovers metal lead from the glass of CRTs using a pyrometallurgical process, claiming a recovery of 95% of the lead present in the glass. However, this process is burdensome from the environmental and energy points of view because it implements the recovery of metallic lead by heating the mass to a temperature higher than 1000 °C and adding carbon as reducing agent; this process inevitably releases lead vapors, which must be abated to prevent environmental contamination. Furthermore, the process residue still contains about 5% of the initial lead, which is still an amount requiring to be disposed of as hazardous waste.

Patent application EP 2455500 A1, assigned to Costech International S.p.A., describes a fully hydrothermal process for the treatment of lead glass, which consists in an alkaline attack of the glass obtaining a suspension containing soluble silicates and insoluble parts, silicate-based in their turn; and subsequent precipitation of the lead from the liquid fraction of this suspension in form of sulfide, PbS, by adding hydrogen sulfide (H₂S) or an alkaline sulfide (preferably sodium sulfide, Na₂S) to the same. Although effective, this process still displays some disadvantages, related in particular to the use of toxic or dangerous materials (such as H₂S), and in that the PbS which is recovered must then be treated, in order to obtain metallic lead, using traditional pyrometallurgical processes which require high temperatures and lead to the formation of sulfur dioxide, SO₂, which is a highly polluting substance and which requires suitable recovery/abatement procedures. Another limit of this process is that part of the initial lead, entrapped in the solid fraction of insoluble silicates, is not recovered and remains in the glass.

It is thus still present in the field the need of a process for the recovery of lead from glass containing it, which is suitable to be adopted on industrial scale and which gives rise to a nearly quantitative recovery of the metal, leaving at most in the silicate byproducts of the process negligible and non-harmful quantities of the metal.

### Summary of the invention

It is the object of the present invention to provide a process which allows an essentially complete recovery of lead from glass containing it, other than lead-glass from CRTs, in addition to the recovery of soluble silicates present in the original glass.

These objects are achieved by means of the present invention with a process for the recovery of lead and silicates from lead-containing glass, comprising the following steps:
a) grinding the glass to obtain a powder of grain size between 1 mm and 200 µm;
b) attacking the glass with a strongly alkaline solution at a temperature of at least 180 °C, obtaining a first suspension consisting of a water-based liquid phase containing soluble silicates and lead in the form of Pb²⁺ ion, and a particulate of insoluble silicates;
c) filtering the first suspension to separate the liquid phase from the particulate;
d) treating the water-based liquid phase produced in step b) in an electrochemical cell with deposit of metallic lead onto the cathode and extracting from the cell a first solution containing soluble silicates and between 0.07 and 0.12% by weight of Pb²⁺ ion;
e) uniting a first part of said first solution with the insoluble silicates particulate separated in step c) and recirculating the obtained mixture in step c);
f) titrating a second part of said first solution to determine the concentration of Pb²⁺ ion;
g) treating said second part of the first solution with metallic zinc for the reduction of Pb²⁺ to metallic lead, obtaining a second solution containing less than 50 ppm by weight of Pb²⁺ ion;
h) filtering said second solution to extract the metallic lead contained in it, with the proviso that the glass is not derived from a cathode ray tube.

The process of the invention preferably comprises a further step, i), consisting in adding an acid to the second silicate solution containing less than 50 ppm by weight of Pb²⁺ ion, with subsequent separation of silica and salts of the metals of said silicates.

### Detailed description of the invention

In the description that follows, all values of concentration given as percent (%) or parts per million (ppm) are by weight, unless indicated otherwise.

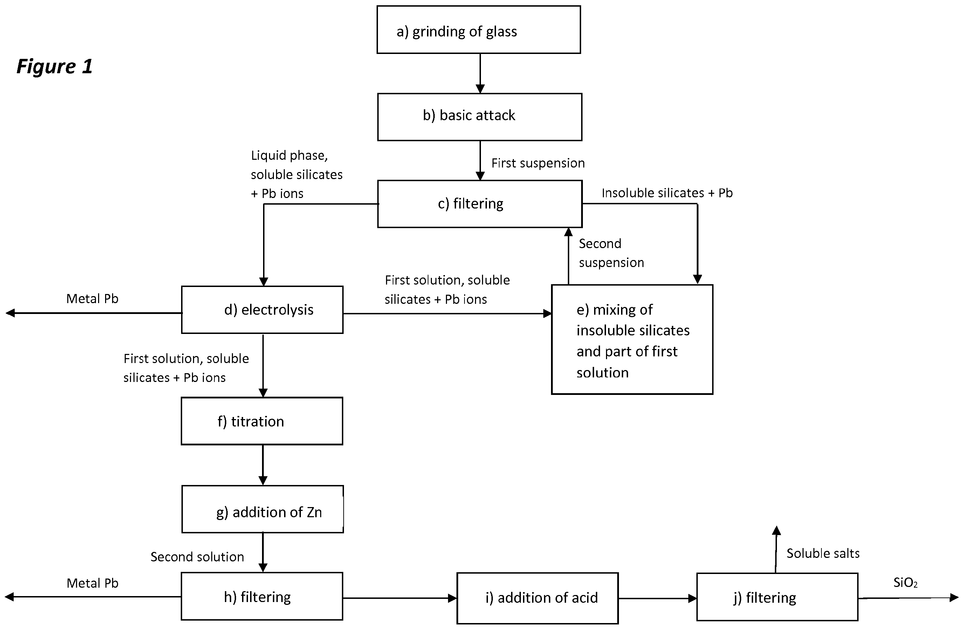

The invention will be described with reference to the sole Figure, which shows a flow chart diagrammatically illustrating the process of the invention.

The first step of the process of the invention, a), consists in grinding the lead glass (for brevity, lead glass will be also referred to simply as "glass" in the description that follows). The object of the grinding it to accelerate the subsequent passage of chemical attacking of the glass itself, to make the whole process industrially advantageous; in fact, since the subsequent chemical attack is a solid-liquid reaction, it is appropriate to increase the exposed glass surface for the reaction to occur in acceptable times. The inventors have verified that, for the purposes of the invention, the glass must be ground to obtain particles of size smaller than 1 mm, and preferably smaller than 0.9 mm; particles of this size may be easily selected, after grinding, by screening with mechanical sieves. If it is desired to accelerate further the dissolution speed of the glass during the subsequent chemical attack and obtain insoluble products in micronized form, the grinding may be pushed with ball mills to obtain powder with grain size of approximately 200 µm ; beyond this level of fineness, the grinding time is extended unnecessarily without a corresponding advantage in the duration of chemical attack.

The second step, b), consists in the chemical attack of the glass by a strongly alkaline solution at a temperature between 180 and 240 °C. This solution is preferably an aqueous solution of a hydroxide of an alkali metal, preferred sodium hydroxide (NaOH) or potassium hydroxide (KOH), in a concentration of between 30 and 50% by weight. If the industrial system network water is particularly hard (i.e., high content of salts, particularly calcium and magnesium carbonates), it is preferable to use demineralized water to further reduce the possible formation of insoluble metal silicates or of insoluble salts of present anions.

An overpressure is not applied from the outside during this step, but given the concerned temperatures the reaction must be carried out in an autoclave, due to the establishment of autogenous pressure following evaporation of part of the water. The glass consists in a mixture of silicates of alkali metals and of other metals (among which mainly alkaline-earth metals); the alkali metal silicates are soluble in the chemical attack conditions described above, while the other metal silicates are poorly soluble or insoluble. A first suspension is thus formed in this step, consisting of a water-based liquid phase containing soluble silicates and lead in form of Pb²⁺ ion and an insoluble silicate particulate. If NaOH solutions are used, the weight ratio between the base (considering the pure base and not its aqueous solution) and the glass is preferably between 2.8 and 3.5, and even more preferably between 3.2 and 3.4.

Step c) consists in filtering the first suspension obtained in the previous step; in order to accelerate the filtering times, a filter press is preferably used for this passage. As a result of this operation, the first suspension is separated into a liquid phase, which contains the soluble silicates and part of the lead initially present in the glass in form of Pb²⁺ ion, and a (wet) particulate constituted by the fraction of insoluble silicates of the initial glass and a part of lead bound in the inorganic macromolecles of these silicates.

The insoluble silicates output from the filter have a residual humidity between 45 and 55% by weight, being impregnated with the solution of soluble silicates. The lead content in such material is due, in the given chemical-physical conditions, in part to the amount of the element contained in the soluble silicates, and in part to the insoluble fraction. The lead associated with the soluble fraction is extracted by washing with a silicate solution with low lead content, and/or by washing with aqueous solutions of strong bases at 0.5 - 10% concentration.

In step d), the liquid phase obtained as described above is treated in an electrochemical cell to implement the deposit on the cathode in metallic form the lead present in solution.

The electrolytic cell must be made of plastic supported by a metal structure, typically made of steel, because the liquid phase to be treated has a high density and thus a heavy weight in case of the treatment of cubic meters of liquid, which is the quantity needed for an actual industrial usefulness of the process.

The electrolytic cell contains a series of electrodes (e.g. 24), in form of parallel plates, which in operation are brought, in alternating order, to cathodic and anodic potential, so that each cathode is interposed between two anodes and vice versa (obviously besides the two outermost electrodes of the series). Suitable materials for making the electrodes are stainless steels, in particular AISI 304 and 316 steel.

The cells forming the electrochemical cell battery may be connected in series to obtain an average current density on the electrode surfaces between 300 and 700 A/m². By experimentation, it has however arisen that connecting the cells in parallel is more convenient and effective in terms of electrode efficiency.

The distance between the electrodes may vary between about 5 and 8 cm. The inventors have observed that at smaller distances the risk of short circuits increases, caused by "bridges" between next electrodes formed by the lead that settles on the cathode; the risk of formation of such bridges is increased as a consequence of the deformation of the electrodes due to the weight of the lead itself (the deposit of lead on the cathodes is not uniform), as well as of the deformation of the supports of the electrodes and as the temperature varies; vice versa, distances between the electrodes higher than those indicated above cause a decrease in yield of the system. The distance between the electrodes is preferably of about 6 cm.

The electrolysis operating conditions are a potential differential between the electrodes of between 1.4 and 2.0 V and a current density between 300 and 500 A/m², preferably of about 450 A/m².

During the electrolysis, oxygen is developed at the anode, while metal lead is deposited on the cathode. The inventors have also observed that the deposited lead is at least in part spongy, to the extent that the parts which detach from the cathode (either spontaneously or with the methods described below) float on the liquid phase. The reasons of the phenomenon have not been systematically investigated, but it is possible that the deposition of lead and the discharge of hydrogen occur in competitive manner at the cathode, and that the extent of this parasite reaction increases as the concentration of lead in the liquid phase decreases; the hydrogen released at the cathode could remain physically entrapped in the metal during its depositing, leading to a form of lead having a mean density which is much lower than the theoretical density.

The excessive accumulation of lead on the cathodes is the source of various problems: because of the weight, it may cause the deformation of the steel plates, which in addition to altering the system from the mechanical point of view, has the immediate consequence of varying the geometric parameters of the cell thus altering its operation, up to the possibility of short circuits between the electrodes. It is therefore necessary to remove the lead deposited on the cathodes continuously or at least periodically.

In a first embodiment of the method of the invention, the removal of lead from the cathodes occurs by periodically inverting the polarity of the electrodes. Said operation may be performed after an electrolysis period lasting from 10 to 60 minutes, preferably from 15 to 30 minutes. However, this method is not optimal because it does not entirely eliminate the problem of electrodes deformation.

A second embodiment is thus preferable, in which the cathodes are continuously cleaned from the deposited lead by means of a plastic material cleaning arm, which works with variable frequency according to the concentration of lead in the liquid phase subjected to electrolysis. Various types of mechanical movements, associated with various electrode geometries, can be used for this purpose: movement of a horizontal scraper, operating from the top downwards, or vice versa; horizontal movement from the right leftwards, or vice versa; or a movement covering a 90° angle of a scraper hinged at a top corner of the electrode.

In each of the two embodiments above, most of the lead initially contained in the liquid phase is separated in form of metallic lead, which is collected either on the bottom of the electrolysis tank or on the surface of the liquid phase for the part in form of floating lead. The electrolysis is continued until the liquid phase contains between 0.07 and 0.12% by weight of Pb²⁺ ions. The operation is not protracted beyond this point, because below these concentrations of lead the hydrogen discharge reaction at the cathode becomes predominant and the energy efficiency of the further electrolysis would be very low.

The solution obtained at the end of the electrolysis, hereinafter named first solution, is divided into two parts.

A first part of this solution, in step e) of the process, is reunited with the insoluble silicates wet particulate that was obtained by filtering during step c). Indicatively, between 20 and 40% of the first solution is used for this operation. The insoluble silicate particulate constitutes a matrix that, because of its viscosity and physical form, entraps part of the lead of the initial glass. The inventors have observed that by putting this particulate into contact with a solution poor in lead, as the first solution obtained from the electrolysis, the concentration gradient of lead contributes to extracting the element from the particulate. The suspension thus obtained is sent back to the filtering on the filter press of step c), and from here separated again into a particulate with a lead content lower than the initial one, and a liquid phase sent to electrolysis. The result is the recirculation of the particulate to filtering, with gradual extraction of the lead initially contained in the glass and then its quantitative recovery in the electrolysis operation.

The second part of the first solution is instead preliminarily titrated in step f) to determine the exact value of the residual content of lead, and a measured amount of metal zinc is then added in step g).

The titration may be performed with atomic absorption analysis or with ICP (Inductively Coupled Plasma) emission spectroscopy analysis, with methods well known to a person skilled in the art.

Metal zinc, which reduces the residual Pb²⁺ ion, is then added to this second part of first solution. The result of this operation is the precipitation of further metallic lead, obtaining a second solution, in which the quantity of Pb²⁺ ion is lower than 50 ppm.

This second solution is subjected in step h) to a new step of filtering, to remove the metallic lead that has formed. The lead particulate has very fine grain size, therefore filters capable of retaining particles with size greater than 200 µm are used for this operation.

The second solution, after filtering, contains: lead in quantity such to respect the legal limits; Zn²⁺ ion (in molar quantity equal to the lead that has been reduced), which however is not a dangerous metal; and soluble silicates (e.g. alkaline silicates), which are commonly used raw materials.

With the process described above, thus, the lead is extracted in practically quantitative mode from the glass which contained it in metal form, and a solution (second solution) is obtained as final product which is no more dangerous and which constitutes a raw material or secondary raw material; the sequence of steps a)-h) thus achieves the minimum necessary result for disposing of lead glass.

However, the process preferably comprises a further step, i), in which an acid is added to the second solution, after the filtering of the step h), to bring the pH to a value lower than about 11. Following this addition, very pure silica precipitates from the solution and metal salts of the soluble silicates are formed; these salts, depending on the acid used and the specific metal ion, may be in their turn either soluble or not.

In a preferred embodiment, the acid used is carbonic acid, added in form of CO₂ that is made to bubble in the second solution. In this case, carbonates, in particular of sodium e potassium, which are totally harmless and completely soluble in the solution, are formed in addition to silica; by means of a last operation of filtering (diagrammatically shown in the figure as step j)) it is possible in this case to separate the pure silica, which may be used as raw material in numerous industrial processes, while the resulting solution may be either eliminated or used, for example, in the production of fertilizers (for the part of potassium which is present). The silica thus obtained, after the addition of a sodium silicate solution to modify the molar ratio between silica and sodium, can then be used in various industrial applications.

## Claims

1. A process for the recovery of lead and silicates from lead-containing glass, comprising the following steps:
a) grinding the glass to obtain a powder of grain size between 1 mm and 200 µm;
b) attacking the glass with a strongly alkaline solution at a temperature of at least 180 °C, obtaining a first suspension consisting of a water-based liquid phase containing soluble silicates and lead in the form of Pb²⁺ ion, and a particulate of insoluble silicates;
c) filtering the first suspension to separate the liquid phase from the particulate;
d) treating the water-based liquid phase produced in step b) in an electrochemical cell with deposit of metallic lead onto the cathode and extracting from the cell a first solution containing soluble silicates and between 0.07 and 0.12% by weight of Pb²⁺ ion;
e) uniting a first part of said first solution with the insoluble silicates particulate separated in step c) and recirculating the obtained mixture in step c);
f) titrating a second part of said first solution to determine the concentration of Pb²⁺ ion;
g) treating said second part of the first solution with metallic zinc for the reduction of Pb²⁺ to metallic lead, obtaining a second solution containing less than 50 ppm by weight of Pb²⁺ ion;
h) filtering said second solution to extract the metallic lead contained in it, with the proviso that the glass is not derived from a cathode ray tube.

2. Process according to claim 1, in which step b) is carried out at a temperature between 180 and 240 °C with an aqueous solution of a hydroxide of an alkali metal in a concentration between 30 and 50% by weight.

3. Process according to claim 2 wherein, when the hydroxide employed is sodium hydroxide, the weight ratio between the base and the glass is between 2.8 and 3.5.

4. Process according to any one of the preceding claims, wherein step c) is carried out using a filter press.

5. Process according to any one of the preceding claims, wherein step d) is carried out in a cell made of plastic material supported by a metal frame, containing a series of electrodes in the form of parallel plates alternately to cathodic potential and anodic potential and mutually spaced between 5 and 8 cm, applying to said electrodes a potential difference of between 1.4 and 2.0 V and using a current density of between 300 and 500 A/m².

6. Process according to any one of the preceding claims, in which the electrodes of the cell are electrically connected in parallel between them.

7. Process according to any one of the preceding claims, wherein step d) is carried out peeling off from the cathodes the deposited lead by periodic inversion of the polarity of the electrodes, after electrolysis periods lasting between 10 and 60 minutes.

8. Process according to any one of claims 1 to 6, wherein step d) is carried out peeling off from the cathodes the deposited lead with a plastic cleaning arm.

9. Process according to any one of the preceding claims, wherein the amount of first solution that in step e) is united to the particulate is between 20 and 40% of said first solution.

10. Process according to any one of the preceding claims, in which the titration of step f) is carried out with an atomic absorption analysis or ICP emission spectroscopy analysis.

11. Process according to any one of the preceding claims, further comprising a step i) consisting in adding an acid to said second solution from which lead was removed in step h), with precipitation of pure silica.

12. Process according to claim 11, wherein said acid is carbon dioxide, CO₂.

13. Process according to any one of claims 11 or 12, further comprising a step j) consisting in the filtration of the solution obtained in step i) for the recovery of silica.
